# FASCICULE DE BREVET EUROPEEN

(11) **EP 2 791 723 B1**
(45) Date de publication et mention de la délivrance du brevet: **07.02.2018**
(21) Numéro de dépôt: 12794977.4
(22) Date de dépôt: 03.12.2012
(51) Int. Cl.: G02B 6/44

(54) **CABLE OPTIQUE A MICROMODULES EXTRACTIBLES ET A PROFILE LONGITUDINAL INTERNE**
OPTISCHES KABEL MIT ABNEHMBAREN MIKROMODULEN UND EINEM INNEREN LÄNGENPROFILELEMENT
OPTICAL CABLE HAVING REMOVABLE MICROMODULES AND AN INNER LONGITUDINAL PROFILE MEMBER

(30) Priorité: 16.12.2011 FR 1161809
(43) Date de publication de la demande: 22.10.2014
(73) Titulaire: Silec Cable, 77876 Montereau Fault Yonne (FR)
(72) Inventeur: JAMET, Patrick, F-89340 Villeneuve La Guyard (FR)
(74) Mandataire: Lavialle, Bruno François Stéphane
(86) Numéro de dépôt international: PCT/EP2012/074287
(87) Numéro de publication internationale: WO 2013/087445

(56) Documents cités:
- WO-A2-2010/068857
- DE-C1- 3 937 695
- FR-A1- 2 746 930
- FR-A1- 2 793 565
- GB-A- 2 158 963
- GB-A- 2 180 190
- US-A- 5 970 196

## Description

La présente invention concerne le domaine des câbles à fibres optiques et plus particulièrement les câbles à fibres optiques sous micromodules extractibles.

### Etat de la technique

La fibre optique est très utilisée dans les réseaux de communication électronique notamment parce que le débit d'informations qu'il est possible de faire transiter via une fibre optique est quasi-indépendant de la distance parcourue par l'information alors que le débit acheminé via des conducteurs en cuivre dépend de la longueur de ceux-ci. Les opérateurs en télécommunication cherchent donc à amener la fibre optique au plus près de l'utilisateur afin d'améliorer le débit disponible. Dans les bâtiments, une fibre optique est ainsi amenée auprès de chacun des utilisateurs. Toutes ces fibres sont regroupées en plusieurs micromodules dans un unique câble. Un micromodule classique est une enveloppe souple, étanche ou non, contenant une ou plusieurs fibres optiques, avec un maximum usuel de douze fibres par micromodule. Ces micromodules sont groupés et entourés d'une gaine extérieure dans laquelle sont fréquemment inclus des renforts longitudinaux destinés à reprendre les efforts de traction du câble lors des opérations de câblage. Ces renforts, généralement en matériau non métallique, sont noyés dans l'épaisseur de la gaine en des points diamétralement opposés et des détrompeurs, généralement sous la forme de filets de couleur peints sur la gaine extérieure, permettent de localiser l'implantation de ces renforts dans la gaine. Les micromodules contenus dans le câble sont repérés grâce à la couleur de la gaine les entourant et les fibres contenues dans chaque micromodule sont elles aussi repérées grâce à la couleur de la gaine les entourant. Douze couleurs de repérage sont habituellement utilisées car elles permettent une identification aisée des câbles, particulièrement sur des petits diamètres. Lorsque les micromodules d'un même câble sont en nombre supérieur à douze, il faut avoir recours à des combinaisons telles que l'alternance de couleurs ou la réalisation d'anneaux colorés qui sont autant de sources d'erreur de repérage, particulièrement sur des micromodules dont le diamètre est généralement compris entre 0,5 mm et 1,5 mm. Les câbles à fibres optiques sous micromodules extractibles sont classiquement installés dans les colonnes montantes de bâtiment. Lorsque l'on souhaite connecter le réseau d'un utilisateur à une fibre du câble à micromodules, une fenêtre d'extraction est découpée dans la gaine extérieure du câble. Les détrompeurs localisant les renforts longitudinaux permettent d'éviter de sectionner ceux-ci. Le micromodule contenant la fibre attribuée à l'utilisateur est identifié grâce à la couleur de sa gaine et extrait sur une longueur pouvant aller jusqu'à quelques mètres. Le micromodule est ouvert et la fibre attribuée à l'utilisateur est extraite et reliée à son réseau par connexion à un point de branchement optique ou à un circuit cuivre via un convertisseur optique.

Lors de la fabrication d'un câble à micromodules, les micromodules sont idéalement disposés de manière à ne pas se croiser, ni être torsadés, et à disposer d'un degré de liberté suffisant pour coulisser l'un par rapport à l'autre lors de l'extraction. L'augmentation du nombre de micromodules dans le câble augmente la probabilité que ceux-ci soient torsadés sur eux-mêmes ou entre eux, ou croisés, et, en réduisant l'espace disponible pour leur libre coulissement l'un par rapport à l'autre, multiplie les risques de gêner voire interdire l'extraction des micromodules. Lors des opérations de câblage, les renforts présents dans la gaine extérieure s'opposent à la courbure du câble et définissent alors un plan préférentiel de courbure qui peut s'avérer contraignant et obliger à des torsions du câble lors de son installation. Dans le cas d'un grand nombre de micromodules, il est nécessaire de réaliser d'importantes ouvertures dans la gaine extérieure du câble afin de pouvoir accéder aux micromodules à connecter et les extraire de la gaine. Enfin, l'intégration des renforts longitudinaux dans la gaine extérieure oblige à réaliser une gaine épaisse, difficile à découper, rendant cette opération dangereuse pour l'opérateur chargé du câblage. Cette épaisseur impacte également les coûts de production du câble, son poids et son encombrement. Il a été envisagé, dans le document GB 2158963 (Telephones Cables Ltd) de placer des micromodules à l'intérieur d'un fourreau possédant des projections intérieures radiales qui délimitent quatre compartiments s'étendant en hélice autour d'un axe longitudinal du câble. Les micromodules sont introduits dans les compartiments par des fentes longitudinales réalisées dans le fourreau. Des bandes de différente nature sont ensuite enroulées autour du fourreau avant que le tout soit recouvert d'une gaine plastique. Cependant, ce câble ne répond que partiellement aux problèmes posés par les dispositifs existants en terme de poids et de souplesse du câble (en raison de l'importante section du fourreau) et d'utilisation (découpe d'une fenêtre d'extraction et extraction des micromodules). Le document DE 39 37 695 C1 décrit un câble à micromodules comprenant un profilé longitudinal interne. Le document FR 2 793 565 décrit un câble avec des marqueurs d'identification sous forme des stries dans la gaine extérieure. Le document WO 2010/068857 A2 décrit un câble comprenant une bande démontable dans la gaine extérieure.

### Objet de l'invention

Un but de l'invention est d'améliorer les opérations de câblage ainsi que l'extraction et le repérage des micromodules dans un câble à micromodules extractibles.

### Exposé de l'invention

A cet effet, on prévoit, selon l'invention, un câble à micromodules extractibles s'étendant selon une direction longitudinale, comprenant un profilé longitudinal interne de compartimentage et une pluralité de micromodules contenant chacun au moins une fibre optique, et une gaine extérieure, le profilé longitudinal interne de compartimentage délimitant avec la gaine extérieure au moins deux compartiments, au moins un des compartiments recevant au moins un des micromodules, la gaine extérieure constituant une des parois de ce compartiment.

Ainsi, le compartimentage de la gaine, en réalisant une séparation des micromodules en sous-ensembles, permet de limiter le risque de croisement des micromodules entre eux et le risque d'une entrave au coulissement des micromodules les uns par rapport aux autres. L'extraction des micromodules est également rendue plus aisée car la fenêtre d'extraction est réalisée par la seule découpe de la gaine extérieure.

Selon un mode de réalisation particulier, le profilé longitudinal comprend un renfort longitudinal.

L'intégration du renfort au profilé permet de supprimer les renforts longitudinaux noyés dans la gaine extérieure des solutions de l'art antérieur. Ainsi, on réduit l'épaisseur de la gaine extérieure, son poids, son coût de production et on facilite la manutention et la pose du câble. Le renfort central autorise une courbure du câble identique suivant toutes les directions rendant le montage plus rapide et plus facile. Enfin, la gaine dont l'épaisseur est réduite facilite le découpage de la fenêtre d'extraction.

Selon un mode de réalisation préféré, la gaine extérieure comporte des marqueurs d'identification repérant les compartiments longitudinaux et leur implantation.

De cette manière, la recherche du micromodule est plus rapide, particulièrement dans les cas où le câble contient plus de douze micromodules.

D'autres caractéristiques et avantages de l'invention ressortiront à la lecture de la description qui suit de modes de réalisation particuliers non limitatifs de l'invention.

### Brève description des figures

Il sera fait référence aux figures annexées, parmi lesquelles :
- la figure 1 est une vue schématique de la section transversale d'un câble selon l'invention.
- la figure 2 est une vue de détail partielle de la gaine du câble selon le mode de réalisation de la figure 1.
- la figure 3 est une vue de détail partielle de la gaine du câble selon un deuxième mode de réalisation de l'invention.
- la figure 4 est une vue schématique de la section transversale d'un câble selon un troisième mode de réalisation de l'invention.

### Description détaillée de l'invention

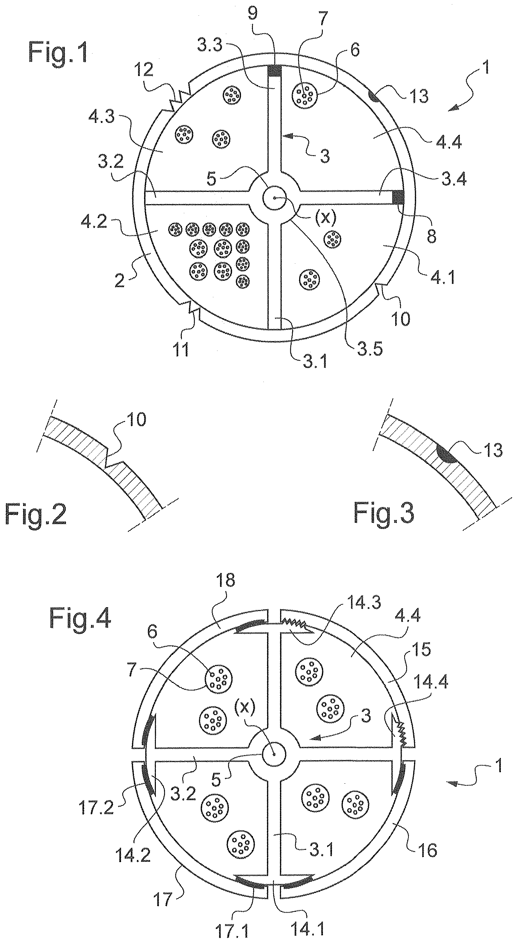

En référence aux figures 1 à 3, le câble à micromodules extractibles conforme à l'invention, généralement désigné 1, s'étend selon un axe longitudinal X et comprend, dans une gaine extérieure tubulaire 2, un profilé longitudinal interne de compartimentage 3 ayant une section transversale en forme de croix définissant, avec la gaine extérieure 2, quatre compartiments 4.1, 4.2, 4.3 et 4.4. Le profilé 3 comprend en son centre un renfort longitudinal cylindrique 5. Les compartiments 4.1 à 4.4 reçoivent chacun entre un et douze micromodules 6 comportant chacun au moins une fibre optique 7. Le mode de fabrication de tels micromodules 6 et des fibres optiques 7 qu'ils contiennent sont connus en eux-mêmes.

Plus précisément, le profilé longitudinal interne de compartimentage 3 possède quatre nervures longitudinales 3.1, 3.2, 3.3, 3.4 s'étendant symétriquement les unes par rapport aux autres. Elles sont, ici, implantées à 90° l'une de l'autre autour de l'axe longitudinal X du câble 1. Ces nervures se rejoignent en un renflement cylindrique 3.5 s'étendant selon l'axe X. Avantageusement, le profilé de compartimentage 3 est réalisé dans une matière plastique souple, de préférence en matériau ignifuge sans halogène, autorisant un rayon minimum de courbure supérieur au rayon minimum de courbure admissible par les micromodules 6 qu'il contient. Les nervures 3.1, 3.2, 3.3 et 3.4 s'étendent dans un plan orthogonal à l'axe longitudinal X jusqu'à venir en contact avec la surface intérieure de la gaine extérieure 2. Ces nervures définissent ainsi, avec la gaine extérieure 2, les quatre compartiments longitudinaux 4.1, 4.2, 4.3 et 4.4 recevant chacun un ou plusieurs micromodules 6. Deux de ces nervures 3, ici les nervures 3.3 et 3.4 comportent, en leur extrémité au contact de la surface intérieure de la gaine extérieure 2, un détrompeur 8 et un détrompeur 9, colorés. Ces détrompeurs 8 et 9 permettent, lors de la fabrication du câble 1, de localiser et identifier rapidement les compartiments 4.1, 4.2, 4.3 et 4.4 du câble 1.

Le renfort longitudinal 5 est noyé dans le renflement cylindrique 3.5 du profilé de compartimentage. Le renfort longitudinal 5 est ici un filin constitué d'un matériau non métallique et comprend par exemple des fibres de renfort à base d'aramide ou de verre noyées ou non dans une résine (renfort composite). Ce filin est destiné à reprendre les efforts longitudinaux de traction exercés sur le câble 1 soumis à son poids propre ou sollicité lors des opérations de tirage de câble, et, dans le cas d'un renfort composite rigidifié, contribue à réduire le coefficient de dilatation/contraction thermique du câble pour limiter les risques de mise en contrainte des fibres optiques lors des variations de température. Le renfort longitudinal 5 possède une souplesse adaptée au rayon de courbure maximale souhaité pour le câble 1.

La gaine extérieure 2 est tubulaire et entoure le profilé longitudinal interne de compartimentage 3. Elle est de préférence réalisée dans un matériau ignifugé sans halogène. La gaine extérieure 2 constitue ainsi la paroi extérieure de chacun des compartiments longitudinaux 4.1, 4.2, 4.3 et 4.4. Ainsi, l'accès à l'un des compartiments longitudinaux du câble 1 requiert une simple opération de découpe de la gaine extérieure.

Selon l'invention, la gaine extérieure 2 comporte sur sa surface extérieure des marqueurs d'identification 10, 11, 12 et 13 permettant de repérer les compartiments longitudinaux 4.1, 4.2, 4.3 et 4.4. Ces marqueurs sont implantés à équidistance des deux nervures constituant le compartiment longitudinal interne. Selon un mode de réalisation particulier détaillé en figure 2, ces marqueurs d'identification comportent des stries 10 réalisées sur la gaine extérieure 2. Le nombre de stries 10 sur la gaine extérieure permet d'identifier et de localiser le compartiment. On obtient ainsi un marquage clair, économique et indélébile de la gaine extérieure 2. Avantageusement, la strie 10 est conformée pour recevoir la lame d'un outil coupant, comme celle d'un cutter par exemple (ou d'un outil dédié, et la guider. Ainsi, lors des opérations de découpe des fenêtres d'extraction, l'outil coupant est guidé et réalise une découpe nette de la fenêtre à un endroit de la gaine dont l'épaisseur est moindre, facilitant encore la découpe. Les opérations de découpe de la fenêtre sont alors plus sûres car le guidage de la lame évite tout dérapage.

Selon un deuxième mode de réalisation illustré en figure 3, le marqueur d'identification comprend un filet coloré 13 réalisé à l'encre ou par co-extrusion dans la masse sur la gaine extérieure. Les compartiments 4.1 à 4.4 peuvent ainsi être rapidement identifiés par la couleur du filet coloré 13 ou par le nombre de ces filets 13 situés sur la gaine extérieure 2 à l'aplomb du compartiment qu'ils identifient.

La fabrication du câble 1 comprend une opération d'extrusion du profilé longitudinal de compartimentage 3 et de la gaine extérieure 2. Le profilé 3 est d'abord extrudé sur le renfort central 5 puis ensuite engagé dans une seconde tête d'extrusion extrudant la gaine extérieure 2. Des tourets de micromodules 6 placés en périphérie du profilé longitudinal 3 et en amont de la tête d'extrusion de la gaine extérieure 2 placent les micromodules 6 dans les compartiments 4.1 à 4.4. Au cours de ces opérations, une attention particulière doit être portée à la position du profilé interne de compartimentage 3 dans la gaine extérieure 2. Afin que les micromodules 6 demeurent extractibles, les compartiments 4.1 à 4.4 réalisés par le profilé 3 doivent demeurer aussi rectilignes que possibles et ne pas être torsadés en hélice. Cependant une torsion avec un pas d'hélice particulièrement long voire infini permet de conserver la facilité d'extraction des micromodules 6. Le profilé 3 s'étend longitudinalement et réalise ainsi quatre compartiments droits. Cette implantation des compartiments, parallèlement à un axe longitudinal plutôt qu'en hélice, facilite la découpe d'une fenêtre d'extraction à l'aide d'outils simples (découpe droite et non hélicoïdale) ainsi que l'extraction des micromodules en réduisant les frottements pouvant avoir lieu avec d'autres micromodules ou avec les parois du compartiments (profilé 3 et gaine extérieure 2). Lors de leur intégration dans le câble 1, les micromodules 6 ne doivent pas être torsadés entre eux et doivent être approximativement parallèles. Les micromodules d'un même compartiment ne doivent pas être revêtus de ruban ou de filins enserrant/couplant les micromodules entre eux. Enfin, il doit subsister suffisamment d'espace entre les micromodules pour que ceux-ci puissent librement coulisser les uns par rapport aux autres et accepter la courbure du câble sans subir de contrainte en traction ou en compression selon leur position dans le compartiment. Une construction faisant appel à un profilé de compartimentage 3 contribue au respect de ces paramètres en évitant que l'ensemble des micromodules 6 d'un même câble 1 soient tous en contact étroit les uns avec les autres.

Les éléments identiques ou analogues à ceux précédemment décrits porteront une référence numérique identique à ceux-ci dans la description qui suit du troisième mode de réalisation du câble selon l'invention.

Selon ce mode de réalisation et en référence à la figure 4, la gaine extérieure 2 comporte plusieurs bandes longitudinales 15, 16, 17 et 18 rapportées sur les extrémités des nervures du profilé longitudinal interne de compartimentage 3. Celui-ci a, ici, une section transversale en forme générale de croix potencée. Chaque nervure 3.1 à 3.4 porte, en son extrémité la plus éloignée de l'axe longitudinal X du câble 1, une patte 14.1, 14.2, 14.3 et 14.4 en forme générale de croissant s'étendant perpendiculairement de part et d'autre de la nervure, dans un plan orthogonal à l'axe. La section de chaque patte 14.1 à 14.4 correspond à un secteur angulaire d'un cercle dont le centre est situé sur l'axe X. Chaque bande longitudinale 15 à 18 est fixée sur le profilé longitudinal interne de compartimentage 3. Cette fixation peut être définitive, réalisée par exemple par collage ou extrusion de la bande en même temps que le profilé 3. Cette situation est illustrée par les bandes 16 et 18 en figure 4. La fixation de la bande peut également être démontable. Le mode de fixation de la bande 15, ici un matériau ignifuge sans halogène, illustre un premier mode de fixation démontable dans lequel les parties des pattes de fixation 14.3 et 14.4 coopérant avec la bande 15 possèdent une surface crantée coopérant avec une surface homologue réalisée sur la bande 15. Celle-ci est alors déclipsée lorsque l'on souhaite avoir accès aux micromodules contenus dans le compartiment 4.4 qu'elle réalise avec les nervures du profilé interne 3.

Le mode de fixation de la bande 17 de la figure 4 illustre un second mode de fixation démontable. Cette bande 17 comprend deux rubans adhésifs 17.1 et 17.2 coopérant avec les pattes de fixation 14.1 et 14.2. La dépose de la bande 17 se fait en décollant les bandes de ruban adhésif 17.1 et 17.2 des pattes de fixation 14.1 et 14.2 du profilé longitudinal interne 3 sur lesquelles les bandes sont collées. Selon un mode de réalisation particulier, la bande 17 est une bande adhésive de largeur équivalente à la section de gaine située entre les nervures 3.1 et 3.2.

Bien entendu, l'invention n'est pas limitée aux modes de réalisation décrits mais englobe toute variante entrant dans le cadre de l'invention telle que définie par les revendications.

En particulier :
- bien que les détrompeurs 8 et 9 localisés sur le profilé interne longitudinal de compartimentage 3 et destinés à localiser les compartiments soient des détrompeurs colorés, l'invention s'applique également à des détrompeurs particularisés par leur forme ;
- bien que le profilé interne longitudinal de compartimentage 3 délimite, ici, quatre compartiments, l'invention s'applique également à un profilé délimitant deux compartiments ou plus ;
- bien que les bandes longitudinales démontables constituant la gaine extérieure soient ici des bandes ayant une longueur identique à celle du câble, l'invention s'applique également à des bandes démontables implantées ponctuellement, par exemple tous les mètres.

## Revendications

1. Câble (1) à micromodules extractibles (6) s'étendant selon une direction longitudinale (X), comprenant un profilé longitudinal interne de compartimentage (3) et une pluralité de micromodules (6) contenant chacun au moins une fibre optique (7), et une gaine extérieure (2), le profilé longitudinal interne de compartimentage (3) délimitant avec la gaine extérieure (2) au moins deux compartiments (4.1, 4.2, 4.3, 4.4), au moins un des compartiments recevant au moins un des micromodules (6), la gaine extérieure (2) constituant une des parois de ce compartiment et dans lequel la gaine extérieure (2) comporte au moins un marqueur d'identification (10) permettant de repérer les compartiments longitudinaux (4.1, 4.2, 4.3, 4.4), le marqueur d'identification (10) comprend au moins une strie (10) réalisée sur la gaine extérieure (2),
la gaine extérieure (2) comprenant au moins une bande (15,17) fixée de manière démontable sur le profilé longitudinal interne de compartimentage.

2. Câble (1) selon la revendication 1, dans lequel le profilé (3) comporte quatre nervures longitudinales (3.1, 3.2, 3.3, 3.4) s'étendant symétriquement les unes par rapport aux autres.

3. Câble (1) selon la revendication 1, dans lequel le profilé de compartimentage (3) comprend un renfort longitudinal (5).

4. Câble (1) selon la revendication 3, dans lequel le renfort longitudinal (5) est constitué d'un matériau non-métallique.

5. Câble (1) selon la revendication 1, dans lequel les marqueurs d'identification (10, 11, 12, 13) comprennent au moins un filet coloré (13) sur la gaine extérieure (2).

6. Câble (1) selon la revendication 1, dans lequel le marqueur d'identification (10, 11, 12, 13) définit l'implantation du plan d'ouverture d'une fenêtre d'extraction par laquelle les micromodules (6) sont extraits.

7. Câble (1) selon la revendication 1, dans lequel la gaine extérieure (2) a une forme tubulaire enveloppant le profilé longitudinal interne de compartimentage (3).

8. Câble selon la revendication 1, dans lequel la bande est une bande de ruban adhésif (17) collée sur le profilé longitudinal interne de compartimentage (3).

## Patentansprüche

1. Kabel (1) mit herausziehbaren Mikromodulen (6), die sich in einer Längsrichtung (X) erstrecken, umfassend ein inneres Unterteilungslängsprofil (3) und eine Vielzahl von Mikromodulen (6), die jeweils mindestens eine optische Faser (7) enthalten, sowie einen äußeren Mantel (2), wobei das innere Unterteilungslängsprofil (3) mit dem äußeren Mantel (2) mindestens zwei Fächer (4.1, 4.2, 4.3, 4.4) begrenzt, wobei mindestens eines der Fächer mindestens eines der Mikromodule (6) aufnimmt, wobei der äußere Mantel (2) eine der Wände dieses Faches bildet und wobei der äußere Mantel (2) mindestens eine identifizierungsmarkierung (10) umfasst, die ein Auffinden der Längsfächer (4.1, 4.2, 4.3, 4.4) ermöglicht, wobei die Identifizierungsmarkierung (10) mindestens eine Rille (10) umfasst, die auf dem äußeren Mantel (2) ausgebildet ist,
wobei der äußere Mantel (2) mindestens einen Streifen (15, 17) umfasst, der auf lösbare Weise auf dem inneren Unterteilungslängsprofil befestigt ist.

2. Kabel (1) nach Anspruch 1, bei dem das Profil (3) vier Längsrippen (3.1, 3.2, 3.3, 3.4) umfasst, die sich symmetrisch zueinander erstrecken.

3. Kabel (1) nach Anspruch 1, bei dem das Unterteilungsprofil (3) eine Längsverstärkung (5) umfasst.

4. Kabel (1) nach Anspruch 3, bei dem die Längsverstärkung (5) aus einem nicht-metallischen Material gebildet ist.

5. Kabel (1) nach Anspruch 1, bei dem die Identifizierungsmarkierungen (10, 11, 12, 13) mindestens einen farbigen Gewindegang (13) auf dem äußeren Mantel (2) umfassen.

6. Kabel (1) nach Anspruch 1, bei dem die Identifizierungsmarkierung (10, 11, 12, 13) das Anbringen der Öffnungsebene eines Extraktionsfensters definiert, durch das die Mikromodule (6) herausgezogen werden.

7. Kabel (1) nach Anspruch 1, bei dem der äußere Mantel (2) eine röhrenförmige Form hat, die das innere Unterteilungslängsprofil (3) umhüllt.

8. Kabel nach Anspruch 1, bei dem der Streifen ein Klebstreifen (17) ist, der auf das innere Unterteilungslängsprofil (3) geklebt ist.

## Claims

1. A cable (1) with extractable micromodules (6) extending in a longitudinal direction (X), comprising an internal longitudinal compartmentalizing profile member (3) and a plurality of micromodules (6) each containing at least one optical fiber (7), and an outer sheath (2), the internal longitudinal compartmentalizing profile member (3) delimiting, with the outer sheath (2), at least two compartments (4.1, 4.2, 4.3, 4.4), at least one of the compartments receiving at least one of the micromodules (6), the outer sheath (2) forming one of the walls of this compartment, and in which the outer sheath (2) comprises at least one identification marker (10, 11, 12, 13) making it possible to identify the longitudinal compartments (4.1, 4.2, 4.3, 4.4), the identification marker (10, 11, 12, 13) comprises at least one striation (10) produced on the outer sheath (2),
the outer sheath (2) comprising at least one strip (15, 17) fixed removably onto the internal longitudinal compartmentalizing profile member.

2. The cable (1) as claimed in claim 1, in which the profile member (3) comprises four longitudinal ribs (3.1, 3.2, 3.3, 3.4) extending symmetrically relative to one another.

3. The cable (1) as claimed in claim 1, in which the compartmentalizing profile member (3) comprises a longitudinal strength member (5).

4. The cable (1) as claimed in claim 3, in which the longitudinal strength member (5) is made of a non-metallic material.

5. The cable (1) as claimed in claim 1, in which the identification markers (10, 11, 12, 13) comprise at least one colored thread (13) on the outer sheath (2).

6. The cable (1) as claimed in claim 5, in which 7. The cable (1) as claimed in claim 1, in which the identification marker (10, 11, 12, 13) defines the location of the opening plane of an extraction window through which the micromodules (6) are extracted.

7. The cable (1) as claimed in claim 1, in which the outer sheath (2) has a tubular form jacketing the internal longitudinal compartmentalizing profile member (3).

8. The cable as claimed in claim 1, in which the outer sheath (2) comprises at least one strip of adhesive tape (17) glued onto the internal longitudinal compartmentalizing profile member (3).
